# EUROPEAN PATENT APPLICATION

(11) **EP 4 804 545 A1**
(43) Date of publication of application: **09.09.2026**
(21) Application number: 24886088.4
(22) Date of filing: 18.10.2024
(51) Int. Cl.: H04N 23/51, H04N 23/55, G03B 17/02, C25D 11/02, B23K 26/21

(54) **CAMERA MODULE**

(30) Priority: 30.10.2023 KR 20230147185
(71) Applicant: LG Innotek Co., Ltd., Seoul 07796 (KR)
(72) Inventor: WOO, Gyung Mok, Seoul 07796 (KR); PARK, Ok Hyeon, Seoul 07796 (KR); YOON, Kyeong Mok, Seoul 07796 (KR); BAE, Jung Young, Seoul 07796 (KR)
(74) Representative: Plasseraud IP
(86) International application number: PCT/KR2024/015896
(87) International publication number: WO 2025/095413

(57) **Abstract**

A camera module comprises: a front housing; a lens module being coupled with the front housing; a substrate being disposed at a lower side of the lens module; and a bonding portion coupling the front housing and the lens module, wherein the lens module includes a barrel body being partially disposed inside the front housing, a lens being disposed inside the barrel body, and a flange being protruded outwardly from the barrel body, wherein the front housing includes a first body and a protruded portion being protruded from an upper surface of the first body, wherein the flange includes a first region perpendicular to an optical axis direction and a second region being extended from the first region in the optical axis direction, and wherein the bonding portion is disposed between the second region and the first body.

## Description

### [Technical Field]

The present invention relates to a camera module

### [Background Art]

Recently, ultra-small camera modules have been developed and are widely used in small electronic products such as smartphones, laptops, and game consoles.

As automobiles become more popular, ultra-small cameras are widely used in vehicles as well as in small electronic products. For example, black box cameras for vehicle protection or objective data on traffic accidents, rear surveillance cameras that allow drivers to monitor the blind spots at the rear of the vehicle through a screen to ensure safety when reversing, and surrounding detection cameras capable of monitoring the surroundings of the vehicle are provided.

The camera may be equipped with a lens, a lens holder that accommodates the lens, an image sensor that converts an image of a subject gathered on the lens into an electric signal, and a printed circuit board on which the image sensor is mounted. The housing forming the outer appearance of the camera is formed of a structure in which the entire area is sealed to prevent internal components from being contaminated by foreign substances containing moisture.

### [Detailed Description of the Invention]

### [Technical Subject]

The present invention provides a camera module capable of lowering the manufacturing cost by reducing the number of parts and firmly fixing a lens module to a housing.

### [Technical Solution]

A camera module according to the present embodiment comprises: a front housing; a lens module being coupled with the front housing; a substrate being disposed at a lower side of the lens module; and a bonding portion coupling the front housing and the lens module, wherein the lens module includes a barrel body being partially disposed inside the front housing, a lens being disposed inside the barrel body, and a flange being protruded outwardly from the barrel body, wherein the front housing includes a first body and a protruded portion being protruded from an upper surface of the first body, wherein the flange includes a first region perpendicular to an optical axis direction and a second region being extended from the first region in the optical axis direction, and wherein the bonding portion is disposed between the second region and the first body.

The protruded portion can be disposed being spaced apart from the first region and the second region in an optical axis direction.

The front housing includes a surface-treated region through anodizing and a surface-untreated region, and an upper surface of the first body facing the first region may be a surface-untreated region.

The barrel body includes a surface-treated region through anodizing and a surface-untreated region, and a lower surface of the second region may be a surface-untreated region.

At least a portion of a lower surface of the second region and an upper surface of the first body may be spaced apart in an optical axis direction.

A first gap is formed between a lower surface of the second region and an upper surface of the first body, and the length of the first gap may be 15% or less of the thickness of the first body with respect to an optical axis direction.

A first chamfered surface is formed on an upper outer surface of the first body where the bonding portion is formed, and a second chamfered surface may be formed on a lower outer surface of the second region where the bonding portion is formed.

A second gap being spaced apart in a direction perpendicular to the optical axis direction may be disposed between the second region and the protruded portion.

A third gap being spaced apart in an optical axis direction may be disposed between the protruded portion and the first region.

### [Advantageous Effects]

Through this embodiment, since the method of joining the front housing and the lens module by welding eliminates the need for adhesives or sealing materials for joining, there is an advantage in that the manufacturing cost can be lowered due to a reduction in the number of parts, and the assembly process can be simplified.

In addition, since the optical axis distance between the lens module and the substrate module can be precisely adjusted before welding process, there is an advantage in that the optimal resolution value inside the camera module can be secured.

### [Brief Description of Drawings]

FIG. 1 is a perspective view of the outer appearance of a camera module according to an embodiment of the present invention.
FIG. 2 is an exploded perspective view of a camera module according to an embodiment of the present invention.
FIG. 3 is a cross-sectional view of a camera module according to an embodiment of the present invention.
FIG. 4 is an enlarged view illustrating **A** in FIG. 3.
FIG. 5 is a cross-sectional view of a camera module according to a prior art.
FIG. 6 is a graph comparing the temperature inside a camera module according to an embodiment of the present invention and the temperature inside a camera module according to a prior art.

### [BEST MODE]

Hereinafter, preferred embodiments of the present invention will be described in detail with reference to the accompanying drawings.

However, the technical idea of the present invention is not limited to some embodiments to be described, but may be implemented in various forms, and inside the scope of the technical idea of the present invention, one or more of the constituent elements may be selectively combined or substituted between embodiments.

In addition, the terms (including technical and scientific terms used in the embodiments of the present invention, unless explicitly defined and described, can be interpreted as a meaning that can be generally understood by a person skilled in the art, and commonly used terms such as terms defined in the dictionary may be interpreted in consideration of the meaning of the context of the related technology.

In addition, terms used in the present specification are for describing embodiments and are not intended to limit the present invention.

In the present specification, the singular form may include the plural form unless specifically stated in the phrase, and when described as "at least one (or more than one of A and B and C", it may include one or more of all combinations that can be combined with A, B, and C.

In addition, in describing the components of the embodiment of the present invention, terms such as first, second, A, B, (a, and (b may be used. These terms are merely intended to distinguish the components from other components, and the terms do not limit the nature, order or sequence of the components.

And, when a component is described as being 'connected', 'coupled' or 'interconnected' to another component, the component is not only directly connected, coupled or interconnected to the other component, but may also include cases of being 'connected', 'coupled', or 'interconnected' due that another component between that other components.

In addition, when described as being formed or disposed in "on (above" or "below (under" of each component, "on (above" or "below (under" means that it includes not only the case where the two components are directly in contact with, but also the case where one or more other components are formed or disposed between the two components. In addition, when expressed as "on (above" or "below (under", the meaning of not only an upward direction but also a downward direction with respect to one component may be included.

The 'optical axis direction' used hereinafter is defined as the optical axis direction of the lens. Meanwhile, the 'optical axis direction' can correspond to an 'up-down direction', a 'z-axis direction', and the like.

Hereinafter, the present invention will be described in more detail with reference to the attached drawings.

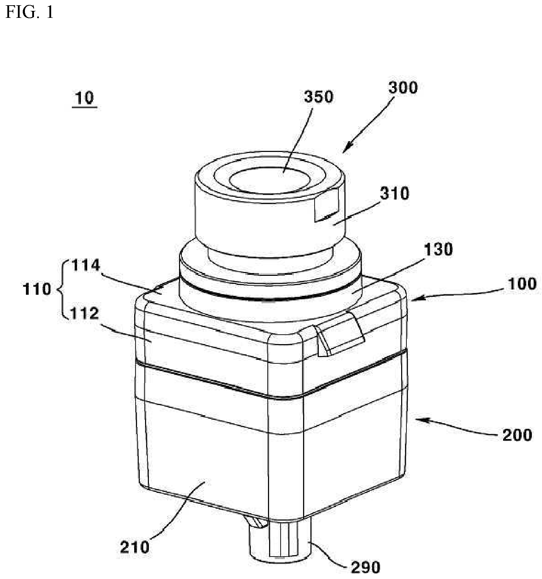

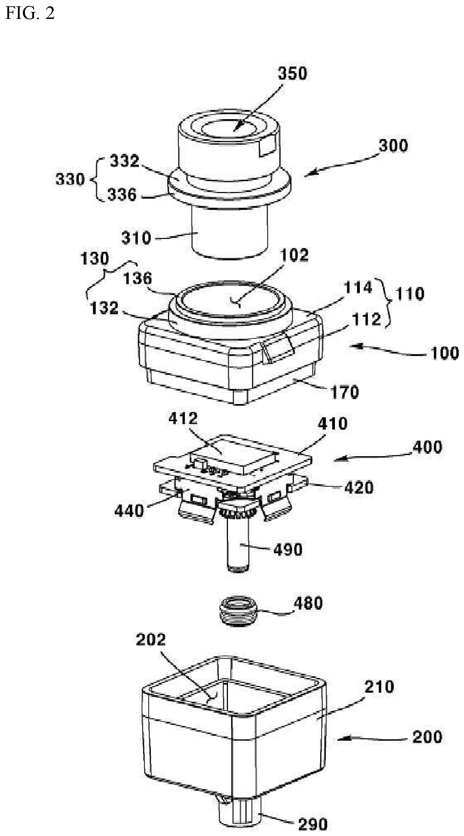

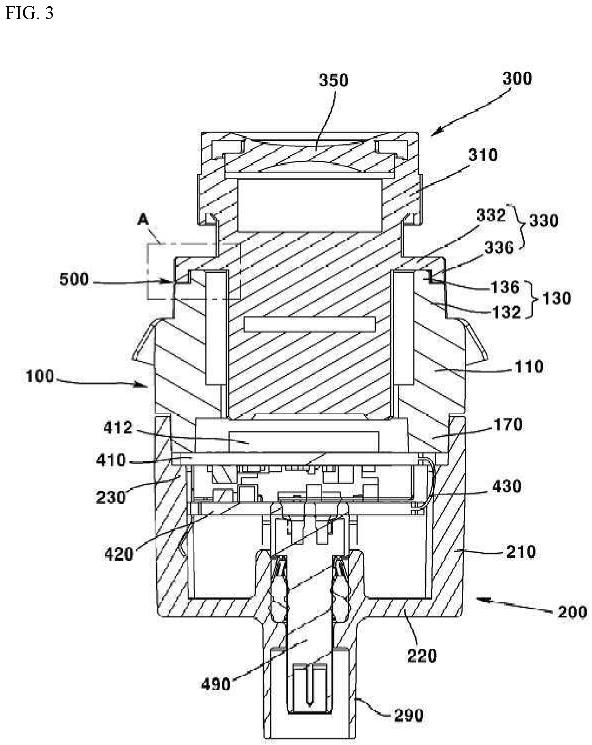

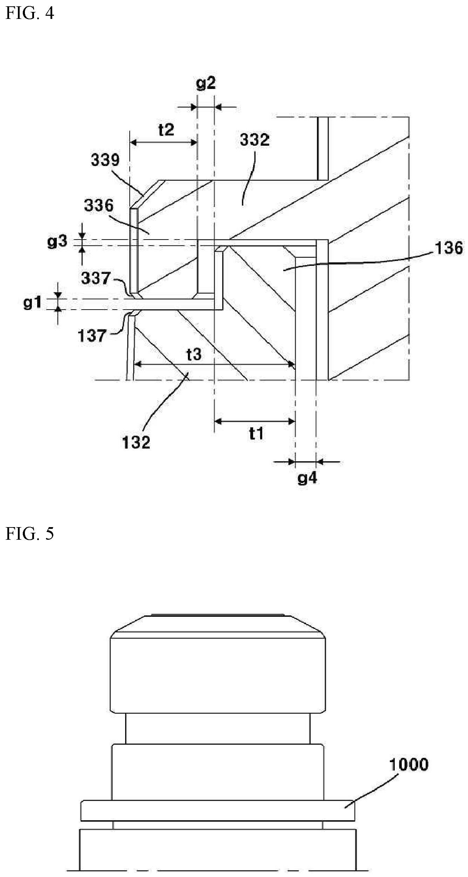

FIG. 1 is a perspective view of the outer appearance of a camera module according to an embodiment of the present invention; FIG. 2 is an exploded perspective view of a camera module according to an embodiment of the present invention; FIG. 3 is a cross-sectional view of a camera module according to an embodiment of the present invention; and FIG. 4 is an enlarged view illustrating **A** in FIG. 3.

Referring to FIGS. 1 to 4, a camera module **10** according to an embodiment of the present invention may be a vehicle camera module. The camera module **10** may be coupled to a vehicle. The camera module **10** may be used for at least one among a front camera, a side camera, a rear camera, and a black box of the vehicle. The camera module **10** may be disposed at the front of the vehicle. The camera module **10** may be disposed at the rear of the vehicle. The camera module **10** may be coupled to a windshield of the vehicle. The camera module **10** may be coupled to a windshield at the front or rear of the vehicle. The camera module **10** may be disposed on a side of the vehicle. The camera module **10** may photograph a subject and output the image as an image on a display (not shown).

The camera module **10** may include a front housing **100**. The front housing **100** may be referred to as one among a front body, an upper housing, a first housing, and a front cover. The front housing **100** may include a second body **110**. The front housing **100** may include a first body **130**. The second body **110** and the first body **130** may be formed integrally.

The second body **110** may be formed of a metal material. The second body **110** may be disposed on a rear housing **200**, which will be described later. The second body **110** may be coupled to the rear housing **200**. The lower end of the second body **110** may be fixed to the rear housing **200**. The second body **110** may be coupled to the rear housing **200** by welding. Unlike this, the second body **110** may be coupled to the rear housing **200** by adhesive or fusion. The second body **110** may be coupled to a substrate module **400**, which will be described later.

The second body **110** may be formed in a rectangular shape with an open bottom. At this time, the corners of the second body **110** may be formed to be rounded. The second body **110** may include an upper plate **114** and a first side plate **112** being extended downward from an edge of the upper plate **114**. The top plate **114** may be formed in a rectangular shape. The upper plate **114** may be extended outward from a lower outer surface of the first body **130**. The first side plate **112** may be extended downward from an outer edge of the upper plate **114**. The first side plates **112** may be provided in multiple numbers. The first side plate **112** may include four side plates. The first side plate **112** may be formed in a square plate shape. The first side plate **112** may include a first-first side plate, a first-second side plate, a first-third side plate being disposed on the opposite side of the first-first side plate, and a first-fourth side plate being disposed on the opposite side of the first-second side plate. The first side plate **112** may include first-first to first-fourth corners being disposed between the first-first to first-fourth side plates, respectively. Each of the first-first to first-fourth corners may include a round shape at least in part.

A space portion being partitioned from other regions may be formed at an inner side of the second body **110**. The space portion may have an open lower portion and an upper portion that may be covered by the first body **130** and the lower surface of the lens module **300**.

The second body **110** may include a first guide **170** (see FIG. 3). The first guide **170** may have a shape being protruded downward from a lower surface of the upper plate **114**. The first guide **170** may be in contact with an upper surface of the substrate module **400**. The lower surface of the first guide **170** may be in contact with an upper surface of the first substrate **410** inside the substrate module **400**, which will be described later. The coupling region of the substrate module **400** may be guided in the space inside the camera module **10** through the first guide **170**.

The front housing **100** may include a first body **130**. The first body **130** may be formed of a metal material. The first body **130** may have a circular cross-sectional shape. The first body **130** may be disposed on the second body **110**. The first body **130** may be extended upward from an upper surface of the second body **110**. The first body **130** may be formed integrally with the second body **110**. As a modified embodiment, the first body **130** may be coupled to the second body **110**. In this case, the first body **130** may be fixed to the second body **110** by an adhesive. The first body **130** may accommodate a lens module **300** therein. A hole **102** into which a lens module **300** is coupled may be formed in the center of the first body **130**. A lens module **300** may be coupled to the hole **102** of the first body **130**.

The front housing **100** may include a protruded portion **136**. The protruded portion **136** may be referred to as a second region **136**. In this case, the first body **130** may include a first region **132** and a second region **136**. The first region **132** may have a shape being protruded upward from an upper surface of the second body **110**, and the second region **136** may have a shape being protruded upward from an upper surface of the first region **132**. An upper surface of the first region **132** and an upper surface of the second region **136** may be disposed with a step in an optical axis direction. An upper surface of the second region **136** may be disposed higher than an upper surface of the first region **132**. The second region **136** may have a shape in which a portion of an upper surface of the first region **132** is protruded upward. The second region **136** may be disposed on the inner side of the first region **132**. Each of the first region **132** and the second region **136** may have a ring-shaped cross-sectional shape.

As illustrated in FIG. 4, a first chamfered surface **137** may be formed on an upper outer surface of the first body **130**. The first chamfered surface **137** may be formed to be inclined with respect to a side surface and an upper surface of the first body **130** so as to connect the side surface and the upper surface of the first body **130**. The first chamfered surface **137** may form an obtuse angle with each of a side surface and an upper surface of the first body **130**.

At least a portion of an outer surface of the front housing **100** may be surface-treated. At least a portion of an outer surface of the front housing **100** may be anodized. An outer surface of the front housing **100** may include a surface-treated region that is surface-treated through anodizing, and a surface-untreated region that is not surface-treated. The surface-untreated region may be a region where the material of the front housing **100** is exposed to the outside through the outer surface.

The front housing **100** may include a surface-treated region and a surface-untreated region. An upper surface of the first body **130** facing the flange **330** of the lens module **300**, which will be described later, in an optical axis direction, may be a surface-untreated region. Accordingly, an upper surface of the protruded portion **136** may be a surface-untreated region. At least a part of the outer surface of the first body **130** being connected to an upper surface of the first body **130** may be a surface-untreated region. The remaining region of the surface of the front housing **100** other than the surface-untreated region described above may be a surface-treated region.

The camera module **10** may include a rear housing **200**. The rear housing **200** may be referred to as any one among a rear body, a lower housing, a second housing, and a rear cover. The rear housing **200** may be formed in a rectangular shape with an open upper portion. The rear housing **200** may be formed of a metal material. The rear housing **200** may be disposed below the front housing **100**. The rear housing **200** may be coupled with the front housing **100**. The rear housing **200** may form an internal space by being coupled with the front housing **100**. The rear housing **200** may include a space portion **202** whose upper surface is being opened.

The rear housing **200** may include a lower plate **220**. The lower plate **220** may face the upper plate **114** of the second body **110** of the front housing **100** in an optical axis direction. The lower plate **220** may be spaced apart from the upper plate **114** of the second body **110** of the first body **110** in an optical axis direction. The lower plate **220** may be parallel to the upper plate **114** of the second body **110** of the front housing **100**. The lower plate **220** may be formed in a square shape. At this time, at least a part of the corner of the lower plate **220** may include a round shape.

The rear housing **200** may include a second side plate **210**. The second side plate **210** may be extended from the lower plate **220**. The second side plate **210** may be extended upward from an outer edge of the lower plate **220**. A shield member (not shown) may be disposed on the second side plate **210**. The shield member may be in surface contact with an inner surface of the second side plate **210**. An upper end of the second side plate **210** may be coupled with the front housing **100**. An upper surface of the second side plate **210** may be disposed to face a lower surface of the first side plate **112** in an optical axis direction. An upper surface of the second side plate **210** may be in contact with a lower surface of the first side plate **112**. The first side plate **112** and the second side plate **210** can be coupled to each other by at least one among welding, adhesive, and fusion methods. An outer surface of the second side plate **210** can be disposed on the same plane as an outer surface of the first side plate **112** of the front housing **100**.

The rear housing **200** may include a connector withdrawal portion **290**. The connector withdrawal portion **290** may have a shape being protruded downward from a lower surface of the lower plate **220**. A connector **490**, which will be described later, may be disposed inside the connector withdrawal portion **290**. The connector withdrawal portion **290** may be formed of a metal material. The connector withdrawal portion **290** may have a hollow pipe shape inside.

A sealing member **480** is disposed between an inner surface of the connector withdrawal portion **290** and an outer surface of the connector **490**, thereby preventing external foreign substances from entering the space inside the camera module **10**.

The rear housing **200** may include a second guide **230** (see FIG. 3). The second guide **230** may have a shape being protruded inwardly from an inner surface of the second side plate **210**. Due to the second guide **230**, the space inside the rear housing **200** may include a plurality of regions having different cross-sectional areas. For example, the cross-sectional area of the upper region of the space inside the rear housing **200** where the second guide **230** is not formed may be larger than the cross-sectional area of the lower region of the space inside the rear housing **200** where the second guide **230** is formed. An upper surface of the second guide **230** may support a lower surface of the first substrate **410** of the substrate module **400**, which will be described later. The upper surface of the second guide **230** may be in contact with a lower surface of the first substrate **410**.

As same as the front housing **100**, at least a portion of an outer surface of the rear housing **200** may be surface treated. At least a portion of an outer surface of the rear housing **200** may be anodized.

The camera module **10** may include a lens module **300**. The lens module **300** may be coupled with the front housing **100**. The lens module **300** may be coupled to the hole **102** of the first body **130**. At least a portion of the lens module **300** may be disposed at an inner side of the first body **130**, and the remaining portion may be disposed to be protruded upward from the front housing **100**.

The lens module **300** may include a barrel body **310** and one or more lenses **350** being accommodated inside the barrel body **310**. The lens **350** may be disposed to face an image sensor **412** inside a substrate module **400**, which will be described later, in an optical axis direction. The lenses **350** may be aligned with the image sensor **412** along an optical axis. A plurality of lenses **350** is provided and may be disposed to be spaced apart from one another along an optical axis direction inside the barrel body **310**. The outermost lens among the plurality of lenses **350** may be exposed above the camera module **10**.

The barrel body **310** may include a space with upper and lower surfaces open at an inside thereof. The lens **350** may be disposed in a space of the barrel body **310**. The barrel body **310** may include a plurality of regions having different cross-sectional areas. For example, a region of the barrel body **310** being disposed inside the front housing **100** may have a smaller cross-sectional area than a region of the barrel body **310** being protruded upward from the front housing **100.** The barrel body **310** may have a circular cross-sectional shape.

The above barrel body **310** may be made of metal.

The barrel body **310** may include a flange **330.** The flange **330** may be disposed on an outer surface of the barrel body **310.** The flange **330** may have a shape being protruded outward from an outer surface of the barrel body **310** more than other regions. The flange **330** may have a circular cross-sectional shape. When the lens module **300** is coupled with the front housing **100,** the flange **330** may be disposed on the first body **130** of the front housing **100.** A lower surface of the flange **330** may be disposed to face an upper surface of the first body **130** in an optical axis direction. An outer surface of the flange **330** may be disposed to form the same plane as an outer surface of the first body **130.** The cross-sectional area of the flange **330** may correspond to the cross-sectional area of the first body **130.**

The flange **330** may include a first region **332** being protruded in a direction perpendicular to the optical axis from an outer surface of the barrel body **310,** and a second region **336** being bent from an end portion of the first region **332** and extended downward in an optical axis direction. The flange **330** may have a cross-section having an approximately " 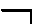 " shape due to the first region **332** and the second region **336.** The first region **332** and the second region **336** may be disposed vertically. The second region **336** may be disposed so as to be overlapped with at least a portion of the protruded portion **136** of the front housing **100** in a direction perpendicular to the optical axis direction. The second region **336** may be disposed so as to surround an outer surface of the protruded portion **136**. A lower surface of the second region **336** may be disposed to face an upper surface of the first body **130** in an optical axis direction. An outer surface of the second region **336** may be disposed to form the same plane as an outer surface of the first body **130**.

An inclined surface **339** (see FIG. 4) can be formed in a region connecting an upper surface of the first region **332** and a side surface of the second region **336**.

As illustrated in FIG. 4, a second chamfered surface **337** may be formed on a lower outer surface of the second region **336**. The second chamfered surface **337** may be positioned to face the first chamfered surface **137** of the first body **130** in an optical axis direction. The second chamfered surface **337** may be formed to be inclined with respect to a side surface and a lower surface of the second region **336** so as to connect a side surface and a lower surface of the second region **336**. The second chamfered surface **337** may form an obtuse angle with a side surface and a lower surface of the second region **336**, respectively. A bonding portion **500** (see FIG. 3), which will be described later, may be formed between the second chamfered surface **337** of the flange **330** and the first chamfered surface **137** of the first body **130**. The welding process for forming a bonding portion **500** can be more easily performed by the first chamfered surface **137** and the second chamfered surface **337**, and the protrusion of the bonding portion **500** from an outer surface of the camera module **100** can be minimized.

At least a portion of an outer surface of the barrel body **310** may be surface-treated. At least a portion of an outer surface of the barrel body **310** may be anodized. An outer surface of the barrel body **310** may include a surface-treated region being surface-treated through anodizing, and a surface-untreated region not being surface-treated. The surface-untreated region may be a region where the material of the barrel body **310** is exposed to the outside through the outer surface.

The barrel body **310** may include a surface-treated region and a surface-untreated region. At least a part of a lower surface of the flange **330** facing the first body **130** of the front housing **100** in an optical axis direction may be a surface-untreated region. More specifically, a lower surface of the second region **336** and a side surface of the flange **330** being connected to a lower surface of the second region **336** may be a surface-untreated region. The remaining regions of the surface of the barrel body **310** other than the surface-untreated region described above may be surface-treated regions.

The camera module **10** may include a substrate module **400**. The substrate module **400** may be disposed in a space inside the camera module **10**. The substrate module **400** may be disposed between the front housing **100** and the rear housing **200**.

The substrate module **400** may include a first substrate **410**, a second substrate **420**, a connection substrate **430**, and a shield can **440**.

The first substrate **410** may be a printed circuit board (PCB). An image sensor **412** may be disposed on an upper surface of the first substrate **410**. The image sensor **412** may be disposed on the first substrate **410** so as to face the lens module **300** in an optical axis direction. An upper surface of the first substrate **410** may be supported by a lower surface of the first guide **170** of the front housing **100**, and a lower surface of the first substrate **410** may be supported by an upper surface of the second guide **230** of the rear housing **200**. The cross-sectional area of the first substrate **410** may be larger than the cross-sectional area of the second substrate **420**.

The second substrate **420** may be a printed circuit board (PCB). The second substrate **420** may be disposed to be spaced apart from the first substrate **410** in an optical axis direction. The second substrate **420** may be disposed below the first substrate **410**. A connector **490** may be coupled to a lower surface of the second substrate **420**. An upper end of the connector **490** may be soldered to a lower surface of the second substrate **420**.

The second substrate **420** may be electrically connected to the first substrate **410**. The second substrate **420** and the first substrate **410** may be electrically connected through a connection substrate **430** (see FIG. 3). The connection substrate **430** may be a flexible printed circuit board (FPCB). The connection substrate **430** may be electrically connected to the first substrate **410** and the second substrate **420** at an upper end and a lower end, respectively.

The shield can **440** is disposed between the first substrate **410** and the second substrate **420**, and can separate the first substrate **410** and the second substrate **420** in an optical axis direction. The shield can **440** may be referred to as a spacer. The shield can **440** may include a fence portion (not shown) being disposed between the first substrate **410** and the second substrate **420**, and a coupling portion (not shown) being extended from the fence portion and coupled with the second substrate **420**. The coupling portion may include a hole. A protrusion for coupling with the hole may be disposed on a side surface of the second substrate **420**.

Hereinafter, the coupled structure of the front housing **100** and the lens module **300** will be described.

The front housing **100** and the lens module **300** can be coupled to each other by welding. The front housing **100** and the lens module **300** can be laser welded.

The camera module **10** may include a bonding portion **500** (see FIG. 3) for coupling the front housing **100** and the lens module **300**. The bonding portion **500** may be referred to as a welding portion. The bonding portion **500** may be positioned between a lower surface of the flange **330** and an upper surface of the first body **130**. The bonding portion **500** may be positioned between a lower surface of the second region **336** and an upper surface of the first body **130**. The bonding portion **500** may be positioned between the first chamfered surface **137** and the second chamfered surface **337**. A lower surface of the second region **336** and an upper surface of the first body **130** may be bonded to each other by the bonding portion **500**. An outer surface of the bonding portion **500** may be protruded outward from an outer surface of the first body **130**. The outer surface cross-sectional area of the bonding portion **500** may be larger than the outer surface cross-sectional area of the first body **130**. An outer surface of the first region **136** of the first body **130** may be protruded outward from an outer surface of the bonding portion **500**. The outer surface cross-sectional area of the first region **136** may be larger than the outer surface cross-sectional area of the bonding portion **500**.

Since an upper surface and a portion of side surface of the first body **130** are regions not having been surface-treated through anodizing, there is an advantage in that the welding process with the flange **330** can be performed more easily. Similarly, since a lower surface and a portion of the side surface of the flange **330** are also a region not having been surface-treated through anodizing the welding process can be performed more easily.

As illustrated in FIG. 4, the thickness **t1** of the protruded portion **136** may be greater than the thickness **t2** of the second region **336** in a direction perpendicular to the optical axis direction. Accordingly, heat being generated during the welding process may be minimized from being transferred to the lens **350**.

A lower surface of the second region **336** and an upper surface of the first body **130** facing the lower surface of the second region **336** in an optical axis direction may be spaced apart at least in an optical axis direction. Accordingly, a bonding portion **500** may be disposed on a part of the lower surface of the second region **336** and a part of the upper surface of the first body **130**, and a remaining part of the lower surface of the second region **336** and the remaining part of the upper surface of the first body **130** may be spaced apart in an optical axis direction. A first gap **g1** may be formed between the lower surface of the second region **336** and the upper surface of the first body **130**. The first gap **g1** may be 15% or less of the thickness **t3** of the first body **130** in a direction perpendicular to the optical axis direction. Accordingly, the welding process for forming the bonding portion **500** may be performed more easily.

With respect to a direction perpendicular to the optical axis, the inner surface of the second region **336** and the outer surface of the protruded portion **136** can be spaced apart from each other. A second gap **g2** can be formed between the inner surface of the second region **336** and the outer surface of the protruded portion **136**.

With respect to a direction perpendicular to the optical axis, an inner surface of the protruded portion **136** and an outer surface of the barrel body **310** may be spaced apart from each other. A fourth gap **g4** may be formed between the inner surface of the protruded portion **136** and the outer surface of the barrel body **310**.

The heat being generated during the welding process through the second gap **g2** and the fourth gap **g4** can be minimized from being transferred to the lens **350** inside the barrel body **310**.

Meanwhile, an upper surface of the protruded portion **136** and a lower surface of the flange **330**, that is, a lower surface of the first region **332**, may be spaced apart in an optical axis direction. A third gap **g3** may be formed between the upper surface of the protruded portion **136** and the lower surface of the first region **332**. The third gap **g3** may be larger than the first gap **g1**.

According to the structure as described above, since the adhesive or sealing member for bonding is omitted through the welding method between the front housing and the lens module, there is an advantage in that the manufacturing cost can be lowered due to a reduction in the number of parts, and the assembly process can be simplified. In addition, by forming a gap between the first body **130** and the flange **330**, the heat transferred to the lens **350** due to the heat from welding can be minimized, thereby preventing deformation of the lens **350** and ensuring reliability of alignment with the image sensor **412**.

In addition, since the optical axis distance between the lens module and the substrate module can be precisely adjusted before welding, there is an advantage in that the optimal resolution value inside the camera module can be secured.

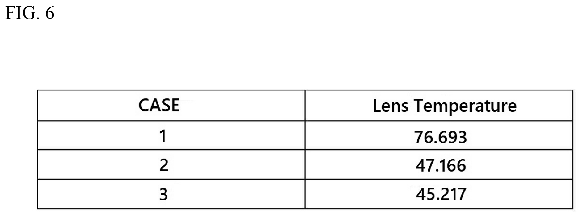

FIG. 5 is a cross-sectional view of a camera module according to a prior art; and FIG. 6 is a graph comparing the temperature inside a camera module according to an embodiment of the present invention and the temperature inside a camera module according to a prior art.

Referring to FIG. 5, an example is shown in which a flange **1000** of a lens module in a camera module according to the prior art is in a straight line parallel to an optical axis direction.

Case 1 of FIG. 6 measures the temperature of the lens according to the coupling process of the front housing and the lens module in the structure of the camera module illustrated in FIG. 5. Case 2 of FIG. 6 measures the temperature of the lens when the thickness of the second region **336** inside the flange **330** is formed to be equal to or greater than the thickness of the protruded portion **136**. Case 3 of FIG. 6 measures the temperature of the lens when the thickness of the second region **336** in the flange **330** is formed to be smaller than the thickness of the protruded portion **136** according to an embodiment of the present invention. Comparing Case 1 and Case 2 as shown in FIG. 6, it can be confirmed that when the flange is formed in an " 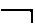 " shape so as to include the first and second regions that are perpendicular to each other, the temperature transfer to the lens is lower during the process of bonding the front housing and the lens module than when the flange is formed in a straight shape.

Comparing Case 2 and Case 3 as in FIG. 6, it can be confirmed that the temperature transfer to the lens is lowered by forming the thickness of the protruded portion **136** larger than the thickness of the second region **336.**

In the above description, it is described that all the components constituting the embodiments of the present invention are combined or operated in one, but the present invention is not necessarily limited to these embodiments. In other words, within the scope of the present invention, all of the components may be selectively operated in combination with one or more. In addition, the terms "comprise", "include" or "having" described above mean that the corresponding component may be inherent unless specifically stated otherwise, and thus it should be construed that it does not exclude other components, but further include other components instead. All terms, including technical and scientific terms, have the same meaning as commonly understood by one of ordinary skill in the art unless otherwise defined. Terms used generally, such as terms defined in a dictionary, should be interpreted to coincide with the contextual meaning of the related art, and shall not be interpreted in an ideal or excessively formal sense unless explicitly defined in the present invention.

The above description is merely illustrative of the technical idea of the present invention, and those skilled in the art to which the present invention pertains may make various modifications and changes without departing from the essential characteristics of the present invention. Therefore, the embodiments disclosed in the present invention are not intended to limit the technical idea of the present invention but to describe the present invention, and the scope of the technical idea of the present invention is not limited by these embodiments. The protection scope of the present invention should be interpreted by the following claims, and all technical ideas within the equivalent scope should be interpreted as being included in the scope of the present invention.

## Claims

1. A camera module comprising:
a front housing;
a lens module coupled with the front housing;
a substrate disposed at a lower side of the lens module; and
a bonding portion coupling the front housing and the lens module,
wherein the lens module includes a barrel body partially disposed inside the front housing, a lens disposed inside the barrel body, and a flange protruded outwardly from the barrel body,
wherein the front housing includes a first body and a protruded portion protruded from an upper surface of the first body,
wherein the flange includes a first region perpendicular to an optical axis direction and a second region extended from the first region in the optical axis direction, and
wherein the bonding portion is disposed between the second region and the first body.

2. A camera module comprising:
a front housing;
a lens module coupled with the front housing;
a substrate disposed at a lower side of the lens module; and
a bonding portion coupling the front housing and the lens module,
wherein the lens module includes a barrel body being partially disposed inside the front housing, a lens disposed inside the barrel body, and a flange protruded outwardly from the barrel body,
wherein the front housing includes a first body and a protruded portion protruded from an upper surface of the first body,
wherein the flange includes a first region perpendicular to an optical axis direction and a second region extended from the first region in the optical axis direction, and
wherein a thickness of the second region is smaller than a thickness of the protruded portion.

3. The camera module according to claim 1 or 2,
wherein the protruded portion is disposed spaced apart from the first region and the second region in the optical axis direction.

4. The camera module according to claim 1 or 2,
wherein the front housing includes a surface-treated region through anodizing and a surface-untreated region, and
wherein an upper surface of the first body facing the first region is a surface-untreated region.

5. The camera module according to claim 1 or 2,
wherein the barrel body includes a surface-treated region through anodizing and a surface-untreated region, and
wherein a lower surface of the second region is a surface-untreated region.

6. The camera module according to claim 1 or 2,
wherein at least a portion of a lower surface of the second region and an upper surface of the first body are spaced apart in the optical axis direction.

7. The camera module according to claim 4,
wherein a first gap is formed between a lower surface of the second region and an upper surface of the first body, and
wherein a length of the first gap is 15% or less of a thickness of the first body with respect to an optical axis direction.

8. The camera module according to claim 1 or 2,
wherein a first chamfered surface is formed on an upper outer surface of the first body where the bonding portion is formed, and
wherein a second chamfered surface is formed on a lower outer surface of the second region where the bonding portion is formed.

9. The camera module according to claim 1 or 2,
wherein a second gap spaced apart in a direction perpendicular to the optical axis direction is disposed between the second region and the protruded portion.

10. The camera module according to claim 1 or 2,
wherein a third gap spaced apart in an optical axis direction is disposed between the protruded portion and the first region.
